# EUROPÄISCHE PATENTSCHRIFT

(11) **EP 3 580 481 B1**
(45) Veröffentlichungstag und Bekanntmachung des Hinweises auf die Patenterteilung: **04.06.2025**
(21) Anmeldenummer: 18703711.4
(22) Anmeldetag: 26.01.2018
(51) Int. Cl.: F16J 15/24, F16J 15/26, F16J 15/3296

(54) **PACKUNGSRING, DICHTUNGSVORRICHTUNG, KOMPRESSOR, ROTATORISCHES SYSTEM UND VERFAHREN ZUM ERFASSEN DES VERSCHLEISSZUSTANDES**
PACKING RING, SEALING DEVICE, COMPRESSOR, ROTATIONAL SYSTEM AND METHOD FOR DETECTING THE CONDITION OF WEAR
BAGUE DE GARNITURE, DISPOSITIF D'ÉTANCHÉITÉ, COMPRESSEUR, SYSTÈME ROTATIF ET PROCÉDÉ DE DÉTECTION DE L'ÉTAT D'USURE

(30) Priorität: 10.02.2017 DE 102017202148
(43) Veröffentlichungstag der Anmeldung: 18.12.2019
(73) Patentinhaber: STASSKOL GmbH, 39418 Stassfurt (DE)
(72) Erfinder: LANGELA, Marc, 39439 Güsten (DE); KRANERT, Dennis, 39439 Güsten (DE); MORAWA, Uwe, 39171 Langenweddingen (DE)
(74) Vertreter: WSL Patentanwälte Partnerschaft mbB
(86) Internationale Anmeldenummer: PCT/EP2018/051948
(87) Internationale Veröffentlichungsnummer: WO 2018/145922

(56) Entgegenhaltungen:
- EP-A1- 1 571 380
- WO-A1-2016/022136
- CH-A- 196 493
- DE-A1- 3 507 272
- US-A- 2 208 976
- US-A1- 2008 136 115
- US-A1- 2009 121 440
- US-A1- 2017 002 928

## Beschreibung

Die vorliegende Erfindung betrifft einen Packungsring, eine Dichtungsvorrichtung mit zumindest einem Packungsring, einen Kompressor mit zumindest einem Packungsring und/oder zumindest einer Dichtungsvorrichtung, ein rotatorisches System mit zumindest einem Packungsring und/oder zumindest einer Dichtungsvorrichtung und ein Verfahren zum Erfassen des Verschleißzustandes eines Packungsrings und/oder einer Dichtungsvorrichtung.

Dichtungsvorrichtungen werden in vielen Bereichen der Technik eingesetzt, um zueinander statische oder sich relativ zueinander bewegende Bauteile abzudichten. Die Relativbewegung kann dabei oszillierender oder rotierender Natur sein. Verschiedene Arten von Dichtungsvorrichtungen weisen beispielsweise Einzeldichtungen oder Dichtungspackungen, die aus mehreren hintereinander angeordneten Einzeldichtungen (auch Packungsringe genannt) bestehen, auf. Ein Einsatzgebiet von Dichtungsvorrichtungen sind Kompressoren.

Neben Kompressoren können Dichtungsvorrichtungen auch in Generatoren eingesetzt werden, wie es beispielsweise aus der EP 1 571 380 A1 bekannt ist. Diese Druckschrift offenbart unter anderem eine Dichtungsvorrichtung mit Bürstendichtungen, wobei die Bürstendichtungen um eine rotierende Welle angeordnet sind, wodurch verhindert werden soll, dass ein Dichtungsöl und ein zur Kühlung verwendetes Gas miteinander in Kontakt kommen.

In Kompressoren kommen Dichtungsvorrichtungen an verschiedenen Stellen zur Anwendung. Der Kompressor kann Teil einer größeren Anlage, beispielsweise in der chemischen Industrie, sein. Ein konkreter Anwendungsfall für Dichtungsvorrichtungen ist die Abdichtung der Kolbenstange eines Kompressors. In einem Kompressor wird die Kolbenstange mehrfach abgedichtet, damit möglichst wenig des zu verdichtenden Prozessgases als Leckagegas entweicht. Zur Abdichtung kommt in der Regel unter anderem eine Kolbenstangenpackung als Dichtungsvorrichtung zum Einsatz. Eine Kolbenstangenpackung weist mehrere Einzeldichtungen auf, die hintereinander angeordnet sind.

Eine Einzeldichtung kann aus mehreren Segmenten aufgebaut sein, die jeweils kreisringsegmentartig ausgebildet sind. Die Segmente liegen mit ihren inneren Umfangsflächen an der Kolbenstange an und werden an ihren äußeren Umfangsflächen von einer gemeinsamen, im Kreis verlaufenden Schlauchfeder auf die Kolbenstange gedrückt. Eine solche Dichtung ist beispielsweise aus der DE 10 2006 015 327 A1 bekannt. Die Segmente bestehen beispielsweise aus Polytetrafluorethylen (PTFE).

In Segmente unterteilte Dichtringe werden mitunter mit einer Verdrehsicherung (auch Arretierung oder Lagesicherung genannt) ausgerüstet. Ein solcher Dichtring ist beispielsweise aus der DE 35 07 272 A1 bekannt.

Im Neuzustand bilden die um eine Kolbenstange angeordneten Segmente keinen geschlossenen Kreisring. Vielmehr bilden sich zwischen den Segmenten Spalte (Stoßspiel). Zwei Einzeldichtungen können unmittelbar hintereinander und hinsichtlich der Position ihrer Segmente so zueinander versetzt angeordnet werden, dass die Spalte der einen Einzeldichtung von den Segmenten der zweiten Einzeldichtung verdeckt werden.

Bei bestimmungsgemäßem Gebrauch wird durch die Bewegung der Kolbenstange nach und nach Material an den inneren Umfangsflächen der Segmente abgetragen. Durch die Schlauchfeder werden die Segmente kontinuierlich an die Kolbenstange gedrückt, sodass sich bei fortschreitendem Verschleiß die Packungsringe daher turnusmäßig ausgetauscht, obwohl sie noch nicht am Ende ihrer Lebensdauer angekommen sind. Ein solches Vorgehen ist unwirtschaftlich. Werden Packungsringe für einen zu langen Zeitraum verwendet, kann es wie oben beschrieben am Ende der Lebensdauer zu einem Vollverschleiß und damit verbundener Leckage kommen, was dazu führen kann, dass die gesamte Anlage außerplanmäßig heruntergefahren und die Packungsringe ausgetauscht werden müssen. Dies führt in der Regel zu hohen Ausfallkosten. Die DE 197 23 804 A1 schlägt eine Vorrichtung zur Ermittlung des Drucks in dem Arbeitsraum einer Hubkolbenmaschine vor, bei der der Druck indirekt durch eine Dehnungsmessung eines druckbelasteten Bauteils ermittelt wird. Durch den Vergleich des Drucks mit Bezugswerten können dann Rückschlüsse auf den Verschleiß gezogen werden. Bei dieser Vorgehensweise handelt es sich um eine indirekte Messung, die keine genauen Rückschlüsse auf den Verschleiß zulässt. Es wäre wünschenswert, den tatsächlich vorliegenden Verschleiß einzelner Bauteile direkt messen zu können.

Aus der JP S54-117852 A und der CH 196 493 A sind weitere Abdichtungsvorrichtungen bekannt. Insbesondere offenbart die JP S54-117852 A einen Packungsring für eine Dichtungsvorrichtung mit zumindest zwei Segmenten, die um eine gemeinsame Hauptachse angeordnet sind, wobei der Packungsring zumindest ein Indikatormittel aufweist, das eine Position zumindest eines der Segmente entlang einer Radialrichtung senkrecht zu der Hauptachse des Packungsrings anzeigt, wobei das Indikatormittel zumindest einen Indikatorstift aufweist, wobei eine Schlauchfeder vorgesehen ist, die die Segmente in Radialrichtung mit einer Kraft beaufschlagt.

Es ist daher Aufgabe der Erfindung, einen Packungsring bereitzustellen, bei dem während des Betriebs der aktuelle Verschleißzustand ermittelt werden kann.

Diese Aufgabe wird durch einen Packungsring gemäß Anspruch 1, durch eine Dichtungsvorrichtung gemäß Anspruch 4, durch einen Kompressor gemäß Anspruch 8, durch ein rotatorisches System gemäß Anspruch 9 sowie durch ein Verfahren gemäß Anspruch 10 gelöst.

Der erfindungsgemäße Packungsring für eine Dichtungsvorrichtung weist zumindest zwei Segmente auf, die um eine gemeinsame Hauptachse X angeordnet sind. Die Segmente weisen bevorzugt eine ringsegmentartige Grundform auf. Vorzugsweise weist der Packungsring drei Segmente auf.

Bei bestimmungsgemäßem Gebrauch liegen die Segmente unmittelbar an einem oszillierenden Körper, beispielsweise an einer Kolbenstange, an. Durch die Bewegung des Körpers wird an einer inneren Umfangsfläche der Segmente Material abgetragen und die Segmente verschleißen nach und nach.

Packungsringe, die Segmente aufweisen, können den Verschleiß für einige Zeit ausgleichen. Die Segmente sind hierzu im Neuzustand des Packungsrings in Umfangsrichtung beabstandet zueinander angeordnet. Zwischen den Segmenten sind dadurch Spalte vorhanden. Durch den kontinuierlichen Verschleiß verringert sich die Breite der Segmente in Radialrichtung nach und nach, wodurch sich die Segmente insgesamt in Radialrichtung auf die Hauptachse X des Packungsrings zu bewegen. Diese Eigenschaft macht sich die Erfindung zu Nutze.

Der Packungsring ist dadurch gekennzeichnet, dass er zumindest ein Indikatormittel aufweist, das eine Position zumindest eines der Segmente entlang einer Radialrichtung senkrecht zu der Hauptachse des Packungsrings anzeigt.

Wie oben beschrieben, bewegen sich die Segmente während ihrer Lebensdauer nach und nach auf die Hauptachse X zu. Streng genommen ist es insbesondere eine Außenumfangsfläche des Segments, die sich auf die Hauptachse X zu bewegt. Unter dieser Bewegung der Außenumfangsfläche wird im Rahmen der Erfindung eine Bewegung des Segments verstanden. Durch das Indikatormittel wird daher insbesondere die Position der Außenumfangsfläche oder eines Teils davon entlang der Radialrichtung angezeigt.

Unter einem Indikatormittel werden insbesondere Mittel verstanden, die es einem Betrachter ermöglichen, die Position oder eine Veränderung der Position eines Segments in Radialrichtung zu erkennen. Das Indikatormittel ist insbesondere eine Markierung auf dem Packungsring oder ein zusätzliches Element.

Das Indikatormittel weist zumindest einen Indikatorstift auf, der an einem der Segmente angeordnet ist. Bei auftretendem Verschleiß bewegt sich der Indikatorstift mit dem Segment nach und nach auf den oszillierenden oder rotierenden Körper zu, sodass durch den Fortschritt oder die Positionsveränderung des Indikatorstifts der Grad des Verschleißes des Segments angezeigt wird. Besonders bevorzugt ist der Indikatorstift derart angeordnet, dass er sich von einer Außenumfangsfläche des Segments in Radialrichtung R wegerstreckt. Bei vorteilhaften Weiterbildungen ist vorgesehen, dass der Indikatorstift eine Schrägfläche aufweist, wobei die Schrägfläche mit der Radialrichtung R einen Winkel α bildet, wobei α > 0° ist. Die Schrägfläche dient vorzugsweise dazu, mit einem Sensorelement zusammenzuwirken, was nachfolgend noch beschrieben wird. Die Schrägfläche verbessert die Genauigkeit des Messens der Positionsveränderung des Indikatorstifts und damit des Verschleißfortschritts. Bevorzugt ist α < 20°.

Gemäß der Erfindung ist der Indikatorstift mit dem Segment verbunden. Der Indikatorstift kann stoff-, kraft- oder formschlüssig mit dem Segment verbunden sein. Alternativ kann der Indikatorstift einteilig mit dem Segment verbunden sein. Bei einer einteiligen Ausführung wird die Bewegung des Segments sehr genau von dem Indikatorstift abgebildet, was zu einer hohen Genauigkeit bei der Verschleißmessung führt. Besonders bevorzugt wird der Indikatorstift formschlüssig mittels eines Bolzens mit dem Segment verbunden. Der Indikatorstift und das Segment weisen hierzu jeweils eine Bohrung auf, durch die ein gemeinsamer Bolzen gesteckt und/oder gepresst wird.

Gemäß der Erfindung weist der Packungsring eine Schlauchfeder auf, die in einer gemeinsamen Nut der Segmente so angeordnet ist, dass die Schlauchfeder die Segmente in Radialrichtung R mit einer Kraft beaufschlagt. Die Segmente werden auf diese Weise von einer gemeinsamen Schlauchfeder auf den oszillierenden Körper gedrückt. Dadurch verschleißen die Segmente bei bestimmungsgemäßem Gebrauch in gleichem oder ähnlichem Ausmaß.

Vorteilhafterweise ist der Indikatorstift teilweise in der Nut angeordnet, sodass er von der Schlauchfeder gehalten wird. Bevorzugt weist der Indikatorstift eine Bohrung auf, welche in der Nut angeordnet ist und die Schlauchfeder aufnimmt.

Der Packungsring kommt bevorzugt in Dichtungsvorrichtungen, die einen oder mehrere Packungsringe und gegebenenfalls weitere Ringe aufweist, und besonders bevorzugt in Kompressoren, insbesondere als Teil einer Kolbenstangenpackung, zum Einsatz. Zu den weiteren Ringen gehören insbesondere Stützringe, Deckringe und Drosselringe. Drosselringe werden eingesetzt, um dynamische Druckanteile abzubauen, und kommen nur in geringem Maße in Kontakt mit der oszillierenden Kolbenstange, so dass hier kaum Verschleiß zu erwarten ist. Trotzdem kann eine erfindungsgemäße Messung des Verschleißes auch bei Drosselringen vorgesehen sein. Gleiches gilt für Stützringe, welche nur sekundär einem Verschleiß unterliegen, da sie einen radialen Spalt zur Kolbenstange am Innendurchmesser besitzen und ihre primäre Funktion das mechanische Abstützen der Dichtringe in Richtung der Hauptachse X darstellt.

Alternativ oder zusätzlich zur Kombination von Deckring und Packungsring kann auch ein Packungsring zum Einsatz kommen, wie er aus DE 10 2006 015 327 A1 oder aus AT 505 550 B1 bekannt ist. Hier handelt es sich um Packungsringe, welche aus Deck- und Dichtsegmenten zusammengesetzt sind, so dass kein zusätzlicher Deck- oder Dichtring zum Erreichen der Dichtfunktion benötigt wird. Auch bei der Verwendung solcher Packungsringe können Drossel- und/oder Stützringe in einer Kolbenstangenpackung zum Einsatz kommen und mit einer erfindungsgemäßen Verschleißmessung ausgestattet sein, aber in einer bevorzugten Ausführungsform wird hier nur der Verschleiß des Packungsringes bzw. der Verschleiß der in der Kolbenstangenpackung enthaltenen Packungsringe gemessen.

Die erfindungsgemäße Dichtungsvorrichtung weist ein Gehäuse und zumindest einen Packungsring auf. Der Packungsring weist zumindest zwei Segmente auf, die um eine gemeinsame Hauptachse X angeordnet sind.

Die Dichtungsvorrichtung ist dadurch gekennzeichnet, dass sie eine Sensoreinrichtung aufweist, die eine Position zumindest eines der Segmente entlang einer Radialrichtung R senkrecht zu der Hauptachse X des Packungsrings erfasst. Insbesondere wird die Position einer Außenumfangsfläche zumindest eines der Segmente entlang der Radialrichtung erfasst.

Wie bereits beschrieben bewegen sich die Segmente verschleißbedingt in Radialrichtung R auf die Hauptachse X zu. Die Sensoreinrichtung ermöglicht es, die Position des Segments und dadurch den Verschleißzustand zu erfassen.

Bei vorteilhaften Weiterbildungen weist die Dichtungsvorrichtung zumindest einen erfindungsgemäßen Packungsring gemäß den obigen Ausführungen auf.

Vorteilhafterweise wirkt die Sensoreinrichtung mit dem Indikatormittel und/oder dem Packungsring zusammen. Auf diese Weise kann die Sensoreinrichtung die Position eines Segments und dadurch dessen Verschleißzustand ermitteln. Besonders bevorzugt wirkt die Sensoreinrichtung mit der Außenumfangsfläche zumindest eines Segments des Packungsrings zusammen. Vorzugsweise weist die Sensoreinrichtung zumindest ein Sensorelement auf. Besonders bevorzugt ist das Sensorelement auf die Außenumfangsfläche gerichtet. Auf diese Weise wird unmittelbar die Position der Außenumfangsfläche und eine Veränderung dieser Position erfasst. Dadurch kann eine Bewegung der Außenumfangsfläche und somit eine Bewegung des zugehörigen Segments erfasst werden.

Bei vorteilhaften Weiterbildungen ist das Sensorelement in einem Winkel β zu der Radialrichtung R angeordnet, wobei 0° ≤ β ≤ 90° ist. Das Sensorelement ist bevorzugt ein zylindrischer Körper mit einer Zylinderachse Z oder weist eine zylindrische Grundform mit einer Zylinderachse Z auf. Bei einer Anordnung des Sensorelements in dem Winkel β wird bevorzugt die Zylinderachse Z in dem Winkel β zu der Radialrichtung R angeordnet. Besonders bevorzugt beträgt β = 90°. Durch die 90°-Anordnung wird das Sensorelement bevorzugt parallel zu der Hauptachse X angeordnet. Die Dichtungsvorrichtung weist dadurch eine kompakte Bauweise auf, da sich ihre Ausdehnung in Radialrichtung R nicht oder nur geringfügig vergrößert.

Das Sensorelement ist bevorzugt ein abstandsmessendes Sensorelement. Insbesondere misst das Sensorelement einen Abstand zwischen sich und dem Packungsring, insbesondere einem Segment des Packungsrings, ferner insbesondere einer Außenumfangsfläche eines Segments des Packungsrings, und/oder zwischen sich und dem Indikatormittel, insbesondere dem Indikatorstift. Die Abstandsmessung erfolgt bevorzugt in Radialrichtung R oder in einer Richtung parallel zu der Hauptachse X des Packungsrings.

Bei bevorzugten Weiterbildungen ist das Sensorelement ein Wirbelstromsensor. Durch eine Spule des Wirbelstromsensors wird ein Magnetfeld erzeugt, sodass in einem leitfähigen Objekt, das sich in dem Magnetfeld befindet, Wirbelströme entstehen. Diese Wirbelströme erzeugen ebenfalls ein Feld, das dem Magnetfeld der Spule entgegen wirkt. Diese Veränderung wird durch den Wirbelstromsensor erfasst. Das erfasste Signal ist je nach Abstand zu dem leitfähigen Objekt unterschiedlich.

Wirbelstromsensoren sind von geringer Größe und können daher gut in eine Dichtungsvorrichtung integriert werden. Darüber hinaus sind Wirbelstromsensoren für den Einsatz in Bereichen mit hoher Temperatur, hohem Druck und Verunreinigungen geeignet.

Bei anderen vorteilhaften Weiterbildungen ist das Sensorelement ein optisches Sensorelement. Ein optisches Sensorelement nutzt elektromagnetische Strahlung zumindest einer Wellenlänge bei der Durchführung seiner Funktion.

Besonders bevorzugt ist das optische Sensorelement ein Konfokalsensor. In einem Konfokalsensor wird mittels mehrerer Linsen ein sogenannter Strahlengang erzeugt. Dabei wird Weißlicht in monochromatische Lichtwellen zerlegt. Die einzelnen Lichtwellen fokussieren in unterschiedlichen Abständen von der Linsenanordnung. Der Konfokalsensor erfasst die Wellenlänge der von einem Objekt reflektierten Lichtwelle. Auf diese Weise kann ermittelt werden, in welchem Abstand sich das Objekt befindet. Konfokalsensoren besitzen eine Auflösung von bis zu 10 nm. Dadurch kann eine hohe Genauigkeit bei der Messung des Verschleißgrades erreicht werden. Durch eine hohe Genauigkeit kann die Lebensdauer eines Packungsrings besser ausgenutzt werden.

Vorteilhafterweise weist das Gehäuse der Dichtungsvorrichtung zumindest zwei Kammerscheiben auf, wobei zwischen zwei nebeneinander angeordneten Kammerscheiben zumindest ein Packungsring angeordnet ist. Neben zumindest einem Packungsring können auch weitere Ringe zwischen den Kammerscheiben und insbesondere zwischen zwei nebeneinanderliegenden Kammerscheiben angeordnet werden.

Besonders bevorzugt werden zwischen zwei nebeneinanderliegenden Kammerscheiben ein Deckring, ein Packungsring und ein Stützring hintereinander angeordnet. In einer erfindungsgemäßen Ausführung wird der Verschleiß bevorzugt am Deckring und am Dichtring gemessen, da diese Ringe in der Regel das beschriebene umlaufende Stoßspiel zwischen den Segmenten aufweisen, und die Segmente sich dadurch bei auftretendem Verschleiß am Innendurchmesser durch Nachrücken in Radialrichtung R auf die Hauptachse X zubewegen.

Bei vorteilhaften Weiterbildungen weist zumindest eine Kammerscheibe eine Aufnahme für einen Indikatorstift eines Packungsrings auf. Eine Aufnahme ist insbesondere dann sinnvoll, wenn sich der Indikatorstift in Radialrichtung von dem Packungsring wegerstreckt. Das Vorsehen einer Aufnahme verhindert in diesem Fall, dass die Kammerscheibe insgesamt vergrößert werden muss.

Besonders vorteilhaft ist es, wenn der Indikatorstift in der Aufnahme geführt wird. Auf diese Weise wird sichergestellt, dass sich der Indikatorstift nur in einer gewünscht Richtung bewegen kann, insbesondere in Radialrichtung. Eine Bewegung in Axialrichtung der Dichtungsvorrichtung und/oder in Umfangsrichtung wird bevorzugt verhindert. Die Aufnahme ist bevorzugt radial beabstandet zu dem Packungsring angeordnet.

Vorteilhafterweise weist zumindest eine Kammerscheibe eine Bohrung für die Aufnahme eines Sensorelements und/oder einer Sensorleitung auf. Es kann auch eine gemeinsame Bohrung in mehreren nebeneinander angeordneten Kammerscheiben vorhanden sein. Die Bohrung ermöglicht es insbesondere, das Sensorelement nah an dem Packungsring und/oder dem Indikatormittel zu positionieren. Auf diese Weise wird eine genaue Messung sichergestellt, insbesondere in Verbindung mit einem Konfokalsensor.

Das Sensorelement wird bevorzugt mittels einer Schraubverbindung in und/oder an einer Kammerscheibe angeordnet. Besonders bevorzugt besitzt das Sensorelement ein Außengewinde und wird in eine Kammerscheibe eingeschraubt. Auf diese Weise wird sichergestellt, dass keine Relativbewegung zwischen Sensorelement und Kammerscheibe stattfindet. Dadurch wird die Präzision der Messung erhöht.

Um sicherzustellen, dass die zusätzlich eingebrachte Bohrung die Dichtfähigkeit der Dichtungsvorrichtung nicht verringert, ist bei vorteilhaften Weiterbildungen vorgesehen, dass zwischen den Kammerscheiben im Bereich der Bohrung zumindest ein Dichtelement angeordnet ist.

Bei vorteilhaften Weiterbildungen weist zumindest eine Kammerscheibe ein Sichtelement auf. Ein Sichtelement ist in zumindest einem Wellenlängenbereich und insbesondere in dem Bereich des sichtbaren Lichts (380 nm bis 780 nm) transparent. Das Sichtelement besteht bevorzugt aus Quarzglas. Das Sichtelement ermöglicht eine Betrachtung des Packungsrings und/oder des Indikatormittels von außerhalb des Innenraums, in dem sich der Packungsring befindet. Insbesondere kann ein Sensorelement so angeordnet sein, dass sich das Sichtelement zwischen Sensor und Packungsring befindet. Auf diese Weise wird das Sensorelement nicht oder nur eingeschränkt den Bedingungen im Innenraum des Gehäuses ausgesetzt. Das Sensorelement ist dann bevorzugt ein Konfokalsensor.

Ein erfindungsgemäßer Kompressor weist eine Kolbenstange und zumindest einen Packungsring gemäß den obigen Ausführungen und/oder zumindest eine Dichtungsvorrichtung gemäß den obigen Ausführungen auf. Der erfindungsgemäße Kompressor wird bevorzugt zum Verdichten von Gasen, insbesondere von Prozessgasen in Industrieanlagen, verwendet.

Ein erfindungsgemäßes rotatorisches System weist eine um eine Wellenachse W drehbare Welle und zumindest einen Packungsring gemäß den obigen Ausführungen und/oder zumindest eine Dichtungsvorrichtung gemäß den obigen Ausführungen auf. Der Packungsring ist auf der Welle angeordnet und dichtet beispielsweise an einem Übergang von einem geschmierten zu einem nichtgeschmierten Bereich ab. Das erfindungsgemäße rotatorische System wird bevorzugt in Gebläsen, Ventilatoren oder Pumpen eingesetzt.

Das erfindungsgemäße Verfahren zum Erfassen des Verschleißzustandes eines Packungsrings mit zumindest zwei Segmenten und/oder einer einen solchen Packungsring aufweisenden Dichtungsvorrichtung weist folgende Schritte auf:
- Anordnen einer Sensoreinrichtung, sodass sie mit einem Segment und/oder einem an einem Segment angeordneten Indikatormittel zusammenwirkt;
- Festlegen einer Startposition des Segments oder des Indikatormittels entlang einer Radialrichtung R;
- Ermitteln zumindest einer Position des Segments oder des Indikatormittels entlang der Radialrichtung R des Segments relativ zu der Startposition mittels der Sensoreinrichtung.

Wie bereits beschrieben verändert sich die Position eines Segments dadurch, dass es an einer inneren Umfangsfläche nach und nach verschleißt. Durch das erfindungsgemäße Verfahren wird die Position eines Segments relativ zu einer Startposition direkt oder indirekt bestimmt. Die ermittelte Position gibt Aufschluss darüber, wie stark das Segment und mit dem Segment der Packungsring verschlissen ist.

Bei vorteilhaften Weiterbildungen wird die Position des Segments oder der Indikatoreinrichtung als Funktion über der Zeit aufgezeichnet. Diese Funktion ermöglicht ein kontinuierliches Überwachen des Verschleißzustands des Packungsrings.

Vorteilhafterweise wird zu Beginn des Verfahrens ein Endwert für die Position des Segments oder des Indikatormittels festgelegt, die ermittelte Position mit dem Endwert verglichen und bei einem Erreichen oder einer Überschreitung des Endwerts erfolgt eine Warnmeldung. Durch den Endwert wird festgelegt, wann ein Packungsring als verschlissen gilt, also wann der Packungsring das Ende seiner Lebensdauer erreicht hat.

Der Endwert kann auch auf einen Teil des Werts für die Lebensdauer festgelegt werden, beispielsweise auf 80%. Auf diese Weise verbleibt eine Sicherheitsreserve.

Bei vorteilhaften Weiterbildungen erfolgt die Ermittlung der Position des Segments oder des Indikatormittels über eine Abstandsmessung. Eine Abstandsmessung ist vorteilhaft, da Abstandsmessungen mit geringem Aufwand durchführbar und die Messgeräte der Abstandsmessung robust sind. Die Abstandsmessung erfolgt bevorzugt zwischen Sensorelement und Indikatormittel und/oder zwischen Sensorelement und einem Segment des Packungsrings, insbesondere einer Außenumfangsfläche des Segments.

Vorteilhafterweise erfolgt die Ermittlung der Position des Segments oder des Indikatormittels über eine optische Messung oder eine Messung mittels Wirbelstrom. Eine optische Messung nutzt elektromagnetische Strahlung zumindest einer Wellenlänge zur Durchführung der Messung. Bei einer optischen Messung können auch nicht-leitfähige Materialien vermessen werden.

Die Erfindung wird nachfolgend anhand der Zeichnungen beispielhaft dargestellt und erläutert. Es zeigt dabei:
- Figur 1: eine erste Ausführungsform eines erfindungsgemäßen Packungsrings in einer perspektivischen Ansicht;
- Figur 2: eine zweite Ausführungsform eines erfindungsgemäßen Packungsrings in einer perspektivischen Ansicht;
- Figur 3: eine Seitenansicht des Packungsrings der Figur 2 mit einem Sensorelement;
- Figur 4: eine Ausführungsform eines Packungsrings mit einem Sensorelement in einer schematischen Ansicht;
- Figur 5: eine weitere Ausführungsform eines erfindungsgemäßen Packungsrings mit einer Sensoreinrichtung in einer schematischen Ansicht;
- Figur 6: eine erste Ausführungsform einer erfindungsgemäßen Dichtungsvorrichtung in einer schematischen Ansicht;
- Figur 7: eine zweite Ausführungsform einer erfindungsgemäßen Dichtungsvorrichtung in einer schematischen Ansicht;
- Figur 8: einen erfindungsgemäßen Kompressor;
- Figur 9: ein erfindungsgemäßes rotatorisches System;
- Figur 10: ein Diagramm einer Verschleißmessung.

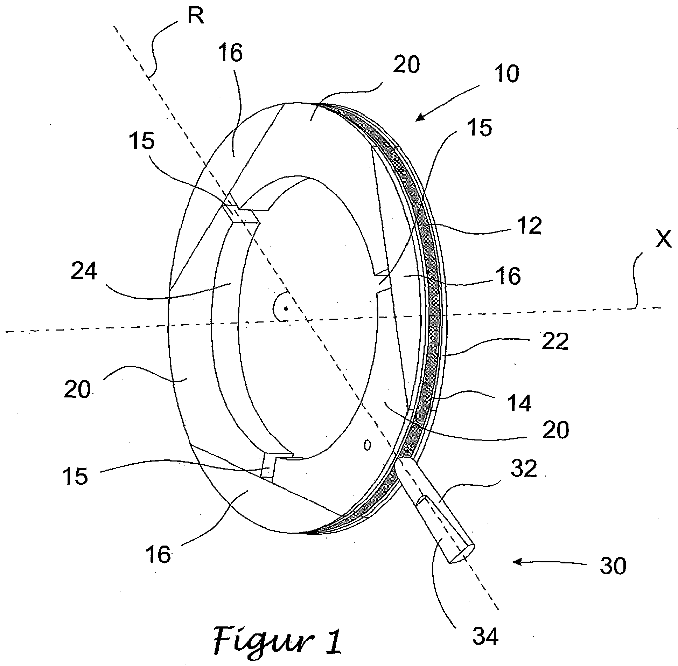

In Figur 1 ist ein Packungsring 10 mit drei Segmenten 20 dargestellt. Die drei Segmente 20 weisen eine gemeinsame Innenumfangsfläche 24 auf. Bei bestimmungsgemäßem Gebrauch liegen die Segmente 20 mit der Innenumfangsfläche 24 beispielsweise an einer Kolbenstange (hier nicht dargestellt) an und dichtet dort ab. Die Segmente 20 sind um eine gemeinsame Hauptachse X angeordnet.

Zwischen jeweils zwei nebeneinanderliegenden Segmenten 20 ist in Umfangsrichtung jeweils ein Spalt 15 vorgesehen. Bei bestimmungsgemäßem Gebrauch verschleißen die Segmente 20 im Bereich der Innenumfangsfläche 24. Dadurch bewegen sich die Segmente 20 nach und nach auf die Hauptachse X zu. Durch diese Bewegung werden die Spalte 15 nach und nach kleiner, bis die Segmente 20 unmittelbar aneinander liegen. Anschließend können sich die Segmente 20 nicht weiter in Richtung der Hauptachse X bewegen, sodass bei weiterem Verschleiß an der Innenumfangsfläche 24 der Packungsring 10 dort undicht wird.

Um eine vollständige Dichtigkeit zu ermöglichen, können zwei Packungsringe 10 in Richtung der Hauptachse X hintereinander angeordnet werden. Dabei werden die Packungsringe 10 in Umfangsrichtung zueinander verdreht, sodass jeder Spalt 15 eines Packungsrings 10 von dem Segment 20 des jeweils anderen Packungsrings 10 überdeckt wird.

Der Packungsring 10 weist drei Stützelemente 16 auf. In Umfangsrichtung des Packungsrings 10 sind die Stützelemente 16 und die Segmente 20 abwechselnd angeordnet. Die Stützelemente 16 weisen mit den Segmenten 20 eine gemeinsame Außenumfangsfläche 22 auf. Die Außenumfangsfläche 22 weist die Form einer Mantelfläche eines Zylinders auf.

Im Bereich der Außenumfangsfläche 22 ist eine Nut 14 vorhanden. In Umfangsrichtung erstreckt sich die Nut 14 über die gesamte Außenumfangsfläche 22. In der Nut 14 ist eine Schlauchfeder 12 angeordnet. Die Schlauchfeder 12 bewirkt eine auf die Hauptachse X gerichtete Kraft. Dadurch werden die Segmente 20 bei bestimmungsgemäßem Gebrauch auf die Kolbenstange (nicht dargestellt) gedrückt. Die Schlauchfeder 12 ist in sämtlichen Figuren schematisch dargestellt.

Der Packungsring 10 weist ein Indikatormittel 30 in Form eines Indikatorstifts 32 auf. Der Indikatorstift 32 ist im Bereich der Außenumfangsfläche 22 an einem Segment 20 angeordnet. Der Indikatorstift 32 ist von zylindrischer Grundform und weist eine Schrägfläche 34 auf. Der Indikatorstift 34 ist so angeordnet, dass sich die Längsachse der zylindrischen Grundform in Radialrichtung R erstreckt. Die Radialrichtung R bildet mit der Hauptachse X einen rechten Winkel.

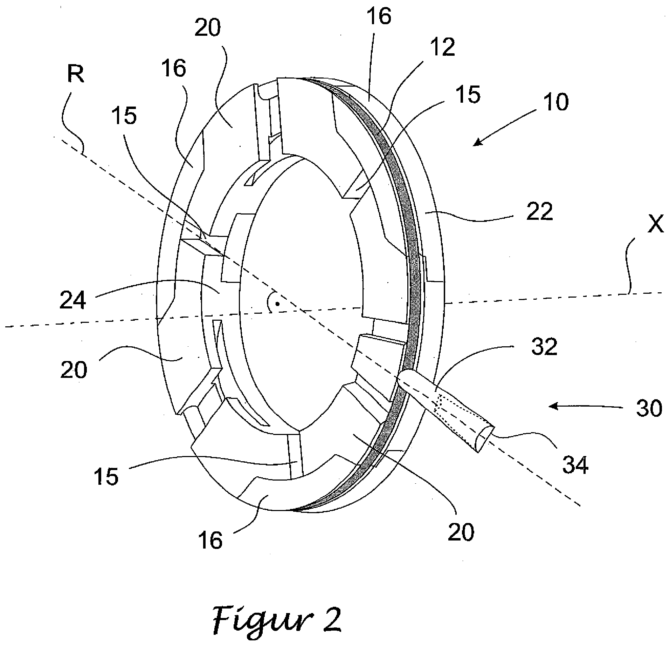

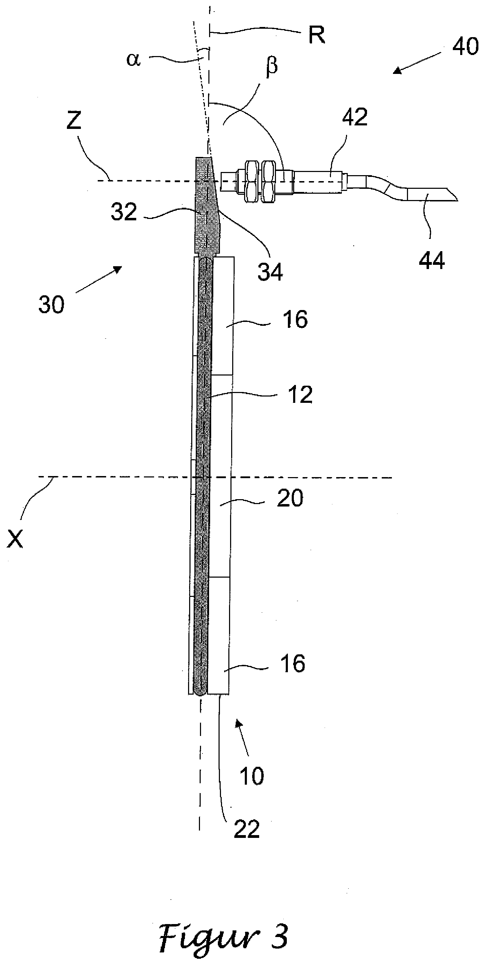

Die Figuren 2 und 3 zeigen einen Packungsring 10 gemäß einer zweiten Ausführungsform. Gegenüber der Ausführungsform aus Figur 1 unterscheiden sich die Segmente 20 und die Stützelemente 16 in ihrer Form. Die Erfindung ist auf eine Vielzahl verschiedener, bekannter Packungsringe 10 anwendbar.

In Figur 3 ist zusätzlich ein Sensorelement 42 mit einer Zylinderachse Z dargestellt. Die Zylinderachse Z ist parallel zu der Hauptachse X des Packungsrings 10. Das Sensorelement 42 ist auf die Schrägfläche 34 des Indikatorstifts 32 ausgerichtet. Die Schrägfläche 34 ist in einem Winkel α zu einer Radialrichtung R angeordnet. Der Winkel α beträgt ca. 7°. Die Zylinderachse Z ist in einem Winkel β zu der Radialrichtung R angeordnet. Der Winkel β beträgt 90°.

Das Sensorelement 42 ermittelt seinen Abstand zu der Schrägfläche 34 des Indikatorstifts 32. Mit zunehmendem Verschleiß bewegen sich die Segmente 20 auf die Hauptachse X zu. Der Indikatorstift 32 ist mit einem Segment 20 verbunden. Daher bewegt sich auch der Indikatorstift 32 verschleißbedingt auf die Hauptachse X zu. Dadurch vergrößert sich nach und nach der Abstand zwischen Sensorelement 42 und Schrägfläche 34, wobei insbesondere der Abstand entlang der Zylinderachse Z gemessen wird. Die kontinuierliche Vergrößerung des Abstands wird von dem Sensorelement 42 erfasst und kann an einer Auswerteeinrichtung (hier nicht dargestellt) angezeigt und/oder verarbeitet werden. Das Sensorelement ist mittels einer Sensorleitung 44 an die Auswerteeinrichtung angeschlossen.

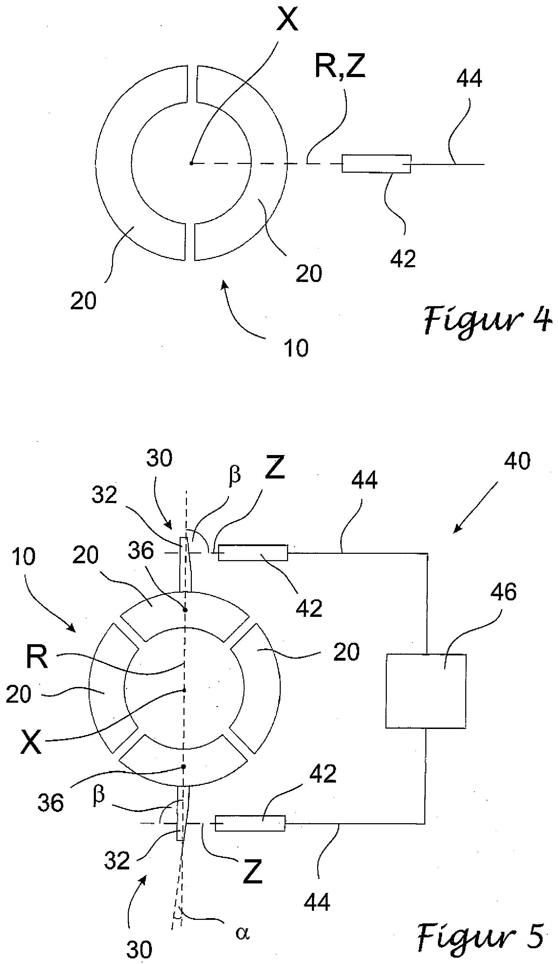

In Figur 4 ist ein Packungsring 10 mit zwei Segmenten 20 schematisch dargestellt. Die Segmente 20 sind als Halbschalen ausgeführt und um eine gemeinsame Hauptachse X angeordnet. Ein Sensorelement 42 mit einer Zylinderachse Z ist auf eines der Segmente 20 ausgerichtet. Das Sensorelement 42 ist ein zylindrischer Körper. Der in Figur 4 dargestellte Packungsring 10 mit dem Sensorelement 42 ist Teil einer erfindungsgemäßen Dichtungsvorrichtung, die in Figur 4 nicht vollständig dargestellt ist.

Die Zylinderachse Z entspricht der Radialachse R. Der Winkel β zwischen Zylinderachse Z und Radialrichtung R beträgt bei dieser Anordnung 0°.

An dem Sensorelement 42 ist eine Sensorleitung 44 angeordnet. Die Sensorleitung 44 führt zu einer Auswerteeinrichtung (hier nicht dargestellt). Das Sensorelement 42 ist bei der gezeigten Ausführungsform ein Wirbelstromsensor, also ein abstandsmessendes Sensorelement 42. Bei bestimmungsgemäßem Gebrauch erfasst das Sensorelement 42 kontinuierlich den Abstand zwischen Sensorelement 42 und Segment 20. Verschleißbedingt bewegen sich die Segmente 20 in Richtung der Hauptachse X, wodurch sich der Abstand zwischen Sensorelement 42 und Segment 20 vergrößert. Aus dem Abstand kann der Verschleiß ermittelt werden.

Figur 5 zeigt eine weitere Ausführungsform eines Packungsrings 10. Der Packungsring 10 weist vier Segmente 20 auf, die um eine gemeinsame Hauptachse X angeordnet sind. An zwei gegenüberliegenden Segmenten 20 ist jeweils ein Indikatorstift 32 angeordnet. Die Indikatorstifte 32 erstrecken sich in einer gemeinsamen Radialrichtung R. Jeder Indikatorstift 32 ist mit jeweils einem Bolzen 36 formschlüssig an einem Segment 20 befestigt.

Die Indikatorstifte 32 weisen jeweils eine Schrägfläche 34 auf. Die Schrägflächen 34 sind jeweils in einem Winkel α zu der Radialrichtung R angeordnet. Bei der gezeigten Ausführungsform ist α = 7°.

Eine Sensoreinrichtung 40 weist zwei Sensorelemente 42 auf. Jeweils ein Sensorelement 42 ist einem Indikatorstift 32 zugeordnet. Die Sensorelemente 42 weisen jeweils eine zylindrische Form mit einer Zylinderachse Z auf. Die Zylinderachsen Z sind jeweils in einem Winkel β zu der Radialrichtung R angeordnet. Bei der gezeigten Ausführungsform ist β = 90°.

Die Sensorelemente 42 sind jeweils über eine Sensorleitung 44 an eine Auswerteeinrichtung 46 angeschlossen. Die Auswerteeinrichtung 46 empfängt die Signale der Sensorelemente 42 und zeigt sie einem Benutzer an. Zusätzlich ist in der Auswerteeinrichtung 46 ein Endwert für die Position der Indikatorstifte 32 hinterlegt. Wird dieser Endwert bei einem der beiden Indikatorstifte 32 überschritten, erfolgt eine Warnmeldung durch die Auswerteeinrichtung 46.

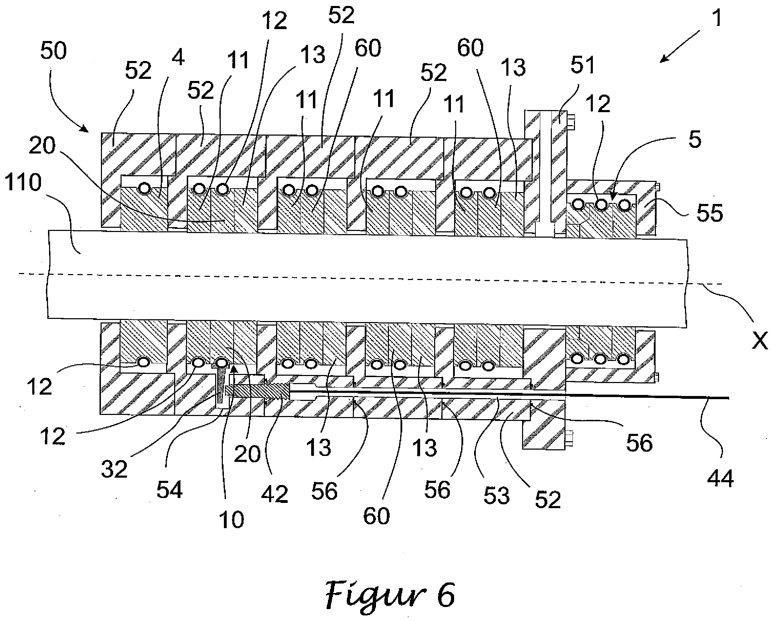

Figur 6 zeigt eine Dichtungsvorrichtung 1 mit einem Gehäuse 50 und einem in dem Gehäuse 50 angeordneten erfindungsgemäßen Packungsring 10. Die Dichtungsvorrichtung 1 ist eine Kolbenstangenpackung zur Abdichtung einer Kolbenstange 110. In dem Gehäuse 50 sind außerdem drei weitere Packungsringe 60 angeordnet. Der Packungsring 10 weist eine Mehrzahl von Segmenten 20 auf, die um eine gemeinsame Hauptachse X angeordnet sind.

Das Gehäuse 50 weist fünf Kammerscheiben 52 auf. Sämtliche Packungsringe 10, 60 sind jeweils zwischen einem Deckring 11 und einem Stützring 13 angeordnet. Jede Kammerscheibe 52 weist einen Innenraum auf, in dem entweder ein Packungsring 10, 60 mit dem dazugehörigen Deckring 11 und Stützring 13 oder ein Drosselring 4 angeordnet ist. Eine Kammerscheibe 52 ist an einer ersten Seite eines Flansches 51 angeordnet. Auf einer der ersten Seite gegenüberliegenden zweiten Seite des Flansches 51 ist ein Aufsatz 55 angeordnet, in dem eine Leckagegasdichtung 5 angeordnet ist.

Die Packungsringe 10, 60, der Drosselring 4, die Deckringe 11 sowie einzelne Ringe der Leckagegasdichtung 5 werden jeweils von einer Schlauchfeder 12 mit einer auf die Hauptachse X ausgerichteten Kraft beaufschlagt. Dadurch liegen diese Ringe an der Kolbenstange 110 an.

Der Packungsring 10 weist einen Indikatorstift 32 auf. Die Kammerscheibe 52 des Packungsrings 10 weist eine Aufnahme 54 für den Indikatorstift 32 auf. Der Indikatorstift 32 weist eine Schrägfläche 34 auf. Durch den Verschleiß der Segmente 20 des Packungsrings 10 bewegt sich der Indikatorstift 32 in der Aufnahme 54 auf die Hauptachse X zu. Ein Sensorelement 42 ist auf die Schrägfläche 34 des Indikatorstifts 32 ausgerichtet. Das Sensorelement 42 ermittelt kontinuierlich den Abstand zu der Schrägfläche 34. Das Sensorelement 42 ist in eine Kammerscheibe 52 eingeschraubt. Bei dem Sensorelement 42 handelt es sich um einen Wirbelstromsensor. Das Sensorelement 42 ist mittels der Sensorleitung 44 an eine Auswerteeinrichtung (hier nicht dargestellt) angeschlossen.

Vier Kammerscheiben 52 sowie die der Flansch 51 weisen eine gemeinsame Bohrung 53 für das Sensorelement 42 und eine Sensorleitung 44 auf. Im Bereich der Bohrung 53 ist zwischen jeweils zwei Kammerscheiben 52 oder einer Kammerscheibe 52 und dem Flansch 51 ein Dichtelement 56 angeordnet. Die Dichtelemente 56 verhindern, dass es aufgrund der Bohrung 53 zu einer Undichtigkeit kommt.

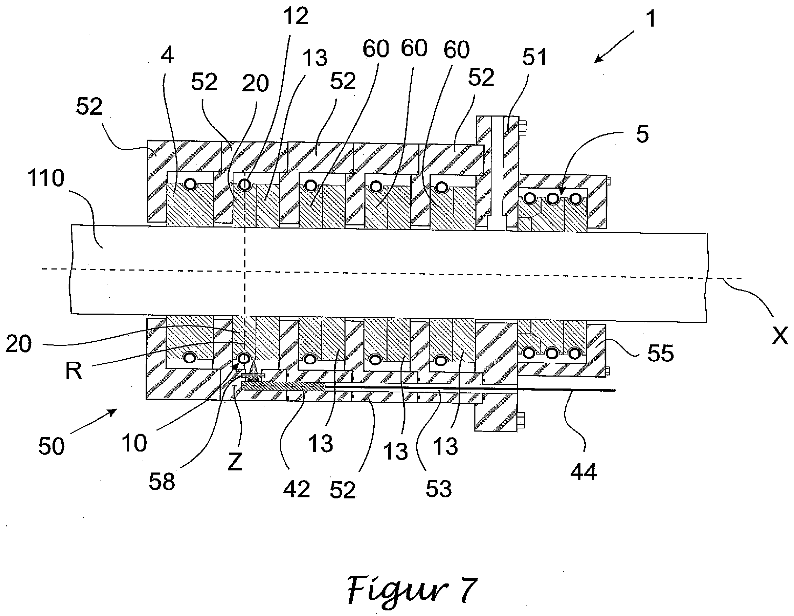

In Figur 7 ist eine weitere Ausführungsform einer erfindungsgemäßen Dichtungsvorrichtung 1 dargestellt. Die Dichtungsvorrichtung 1 weist ein Gehäuse 50 mit fünf Kammerscheiben 52, einen Flansch 51 und einen Aufsatz 55 auf, durch die eine Kolbenstange 110 verläuft.

Die Kammerscheiben 52 weisen jeweils einen Innenraum auf, in dem sich entweder ein Packungsring 10, 60 zusammen mit einem Stützring 13 oder ein Drosselring 4 befindet. Die Packungsringe 10, 60 sind herkömmlicher Bauart. In dem Innenraum des Aufsatzes 55 ist eine Leckagegasdichtung 5 angeordnet.

Die Dichtungsvorrichtung 1 weist ein optisches Sensorelement 42 in Form eines Konfokalsensors auf. Die Kammerscheibe 52 des Packungsrings 10 weist radial außerhalb des Packungsrings 10 ein Sichtelement 58 auf. Das Sichtelement 58 ist bei der gezeigten Ausführungsform eine Scheibe aus Quarzglas. Das Sensorelement 42 ist radial außerhalb des Sichtelements 58 angeordnet. Das Sichtelement 58 befindet sich zwischen Packungsring 10 und Sensorelement 42.

Der Packungsring 10 weist eine Mehrzahl von Segmenten 20 auf, die um eine gemeinsame Hauptachse X angeordnet sind. Der Konfokalsensor weist eine zylindrische Grundform auf. Er ist in 90°-Bauweise ausgeführt. Bei dieser Bauweise ist die Messrichtung senkrecht zu einer Zylinderachse Z der zylindrischen Grundform. Die Zylinderachse Z ist parallel zu der Hauptachse X angeordnet. Die Messrichtung des Sensorelements 42 ist somit parallel zu einer Radialrichtung R des Packungsrings 10.

Das Sensorelement 42 erzeugt einen Strahlengang, mittels dem der Abstand zwischen dem Sensorelement 42 und einem Segment 20 des Packungsrings 10 ermittelt wird. Bewegt sich das Segment 20 verschleißbedingt auf die Hauptachse X zu, so wird der Abstand größer. Auf diese Weise kann der Verschleiß des Segments 20 ermittelt werden.

Das Sensorelement 42 ist mittels der Sensorleitung 44 an eine Auswerteeinrichtung (hier nicht dargestellt) angeschlossen.

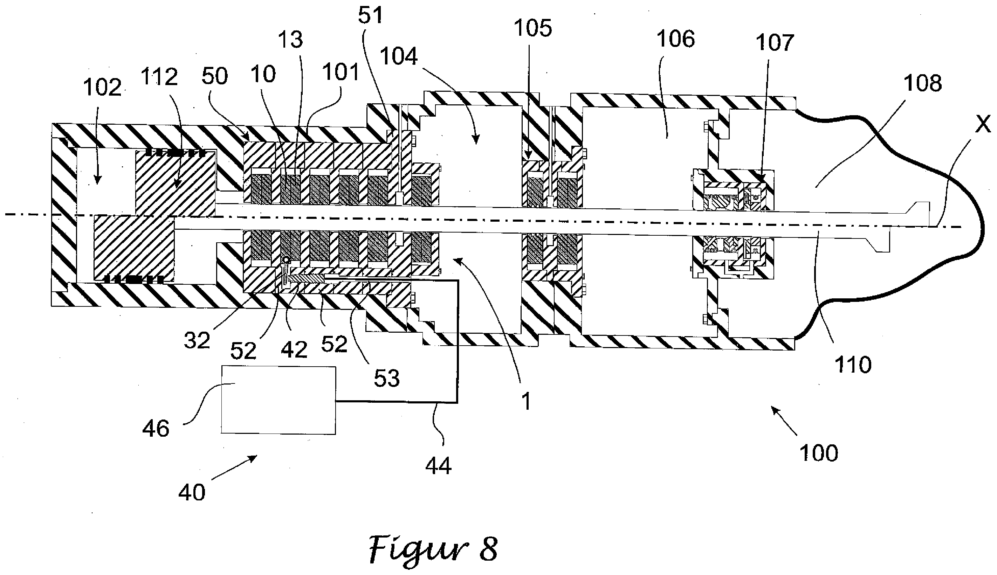

Figur 8 zeigt einen erfindungsgemäßen Kompressor 100 mit einer Dichtungsvorrichtung 1. Der Kompressor 100 weist ein Kompressorgehäuse 101 auf, in dem eine Kolbenstange 110 angeordnet ist. Die Kolbenstange 110 führt bei bestimmungsgemäßem Gebrauch eine oszillierende Bewegung aus und wird von einer Kurbel (nicht dargestellt) angetrieben.

Der Kompressor 100 weist einen Verdichtungsraum 102 auf, in dem Prozessgas verdichtet werden kann. In dem Verdichtungsraum 102 ist ein Kolben 112 angeordnet. Der Kolben 112 ist mit der Kolbenstange 110 verbunden. Ausgehend von dem Verdichtungsraum 102 weist der Kompressor 100 entlang der Hauptachse X ein erstes Zwischenstück 104, ein zweites Zwischenstück 106 und einen Kurbelraum 108 auf. Die Kolbenstange 110 verläuft von dem Verdichtungsraum 102 bis in den Kurbelraum 108.

Kolbenstange 110 und Kolben 112 sind in zwei Zuständen dargestellt. In einem ersten Zustand befindet sich der Kolben 112 an einem ersten Umkehrpunkt. An einem Umkehrpunkt ist die Geschwindigkeit des Kolbens gleich Null. In dem ersten Zustand nimmt das Prozessgas das größtmögliche Volumen in dem Verdichtungsraum 102 ein. In einem zweiten Zustand befindet sich der Kolben 112 an einem zweiten Umkehrpunkt. In dem zweiten Zustand wurde das Prozessgas komprimiert und nimmt ein geringeres Volumen ein. Nicht dargestellt sind in Figur 8 ein Einlass und ein Auslass für das Prozessgas.

Zwischen dem Verdichtungsraum 102 und dem ersten Zwischenstück 104 ist die Dichtungsvorrichtung 1 angeordnet. Die Dichtungsvorrichtung 1 ist als Kolbenstangenpackung ausgeführt. Die Dichtungsvorrichtung 1 weist ein Gehäuse 50 auf, in dem ein Packungsring 10 angeordnet ist. Der Packungsring 10 weist einen Indikatorstift 32 auf, der sich von dem Packungsring 10 radial nach außen erstreckt. Der Packungsring 10 ist gemeinsam mit einem Stützring 13 zwischen zwei Kammerscheiben 52 des Gehäuses 50 angeordnet.

Der Kompressor 100 weist eine Sensoreinrichtung 40 auf. Die Sensoreinrichtung weist ein Sensorelement 42, eine Sensorleitung 44 und eine Auswerteeinrichtung 46 auf. Das Sensorelement 42 ist in dem Gehäuse 50 angeordnet. Die Sensorleitung 44 verbindet das Sensorelement 42 mit der Auswerteeinrichtung 46. Das Sensorelement 42 ist bei der dargestellten Ausführungsform ein Wirbelstromsensor. Das Gehäuse 50 weist eine Bohrung 53 für das Sensorelement 42 und einen Teil der Sensorleitung 44 auf.

Zwischen dem ersten Zwischenstück 104 und dem zweiten Zwischenstück 106 ist eine Zwischendichtung 105 angeordnet. Die Zwischendichtung 105 ist eine zusätzliche Absicherung und verhindert, dass Prozessgas, das trotz der Dichtungsvorrichtung 1 in das erste Zwischenstück 104 gelangt ist, in das zweite Zwischenstück 106 gelangt. Zwischen dem zweiten Zwischenstück 106 und dem Kurbelraum 108 ist eine Ölabstreifdichtung 107 angeordnet. Die Ölabstreifdichtung 107 sorgt dafür, dass möglichst wenig Schmiermittel, insbesondere Öl, aus dem Kurbelraum 108 in das zweite Zwischenstück 106 gelangt.

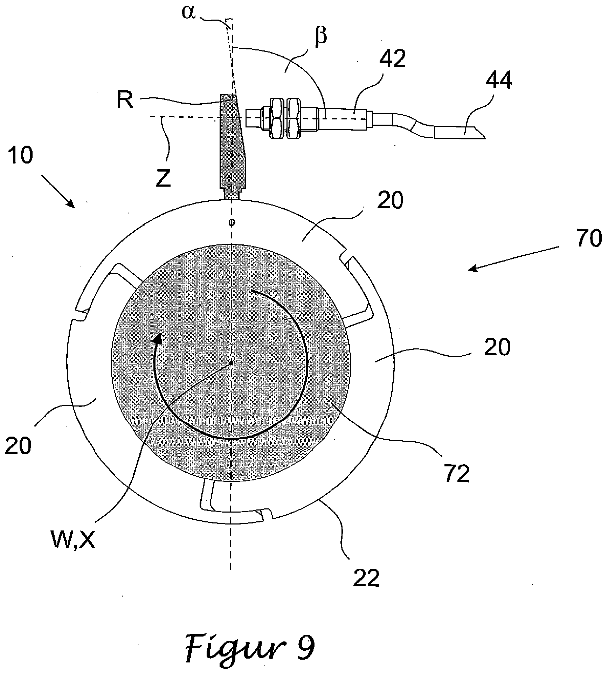

In Figur 9 ist ein erfindungsgemäßes rotatorisches System 70 dargestellt. Das rotatorische System 70 weist eine Welle 72 mit einer Wellenachse W auf. Die Welle 72 ist um die Wellenachse W drehbar gelagert. Auf der Welle 72 ist ein Packungsring 10 angeordnet.

Der Packungsring 10 weist drei Segmente 20 auf. Die Segmente 20 sind um eine gemeinsame Hauptachse X, die bei der gezeigten Ausführungsform der Wellenachse W entspricht, angeordnet. An einem Segment 20 ist ein Indikatorstift 32 angeordnet. Der Indikatorstift 32 erstreckt sich in Radialrichtung R von dem Segment 20 weg. Ein Sensorelement 42 mit einer Zylinderachse Z ist auf den Indikatorstift 32 ausgerichtet.

Optionale, nicht dargestellte Bauteile des rotatorischen Systems 70 sind unter anderem ein Gehäuse, Lager für die Welle und eine Antriebseinrichtung.

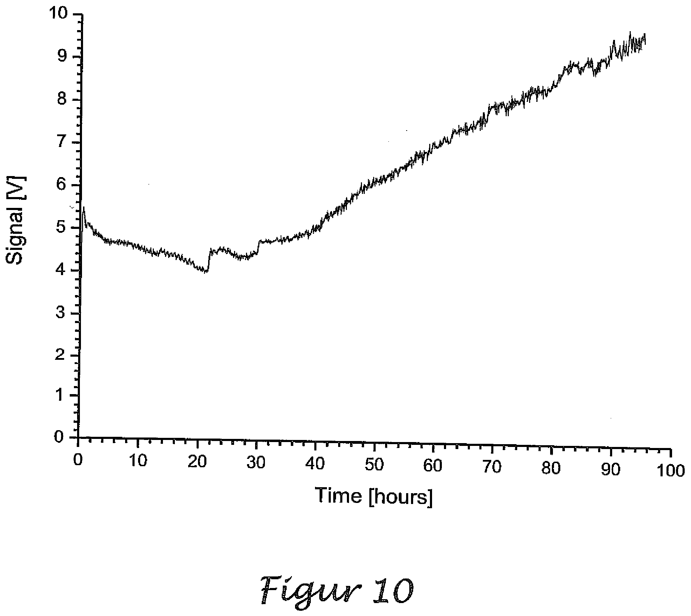

Figur 10 zeigt ein Diagramm einer Verschleißmessung. Auf der Ordinatenachse ist die Zeitdauer der Messung in Stunden angegeben. Auf der Abszissenachse ist die Signalstärke des Sensorelements in Volt angegeben.

Zu sehen ist das Signal eines Wirbelstromsensors, welcher auf die Schrägfläche des an einem Segment angebrachten Indikatorstiftes gerichtet ist. Das Segment ist Teil eines Packungsrings in einer Kolbenstangendichtung eines Kolbenkompressors. Als Material der Segmente wurde ein schnell verschleißendes PTFE verwendet um die Versuchsdauer bis zum Totalverschleiß des Dichtringes möglichst zu minimieren. Der Packungsring dichtet einen dynamischen Druck von 30 bar auf 80 bar ab. Als abzudichtendes Medium wurde Stickstoff eingesetzt.

Man erkennt, dass sich zu Beginn des Versuchs in den ersten 36 h das System einläuft und ein Anfangswert von 5V gehalten wird. Während dieser Zeit stellen sich Druck und Temperatur bis zum endgültigen Beharrungszustand ein.

Nach dieser Einlaufphase ist ein kontinuierlicher Anstieg des Signals festzustellen. Dieser Anstieg gibt den kontinuierlichen Verschleiß des Segments wieder, dem das Sensorelement zugeordnet ist. Kurzfristige Schwankungen ("Zittern") sind auf Druckschwankungen und die Bewegung der Kolbenstange zurückzuführen. Bei etwa 95 h ist ein Wert von fast 10 V erreicht, was einem Verschleiß von 100 % entspricht. Zu diesem Zeitpunkt lagen die Segmente des Packungsrings aneinander, sodass die Lebensdauer erschöpft war.

Bei vergleichbaren Packungsringen könnte somit ein Endwert von 9 V angegeben werden. Bei diesem Endwert könnte eine Auswerteeinrichtung ein Warnsignal ausgeben.

### Bezugszeichenliste

- 1: Dichtungsvorrichtung
- 4: Drosselring
- 5: Leckagegasdichtung

- 10: Packungsring
- 11: Deckring
- 12: Schlauchfeder
- 13: Stützring
- 14: Nut
- 15: Spalt
- 16: Stützelement

- 20: Segment
- 22: Außenumfangsfläche
- 24: Innenumfangsfläche

- 30: Indikatormittel
- 32: Indikatorstift
- 34: Schrägfläche
- 36: Bolzen

- 40: Sensoreinrichtung
- 42: Sensorelement
- 44: Sensorleitung
- 46: Auswerteeinrichtung

- 50: Gehäuse
- 51: Flansch
- 52: Kammerscheibe
- 53: Bohrung
- 54: Aufnahme
- 55: Aufsatz
- 56: Dichtelement
- 58: Sichtelement

- 60: weiterer Packungsring

- 70: rotatorisches System
- 72: Welle

- 100: Kompressor
- 101: Kompressorgehäuse
- 102: Verdichtungsraum
- 104: erstes Zwischenstück
- 105: Zwischendichtung
- 106: zweites Zwischenstück
- 107: Ölabstreifdichtung
- 108: Kurbelraum

- 110: Kolbenstange
- 112: Kolben

- R: Radialrichtung
- W: Wellenachse
- X: Hauptachse
- Z: Zylinderachse

- α: Winkel
- β: Winkel

## Patentansprüche

1. Packungsring (10) für eine Dichtungsvorrichtung (1) mit zumindest zwei Segmenten (20), die um eine gemeinsame Hauptachse (X) angeordnet sind, wobei der Packungsring (10) zumindest ein Indikatormittel (30) aufweist, das eine Position zumindest eines der Segmente (20) entlang einer Radialrichtung (R) senkrecht zu der Hauptachse (X) des Packungsrings (10) anzeigt, wobei das Indikatormittel (30) zumindest einen Indikatorstift (32) aufweist, der an einem Segment (20) angeordnet ist und wobei der Indikatorstift (32) mit dem Segment (20) verbunden ist, wobei eine Schlauchfeder (12) vorgesehen ist, die in einer gemeinsamen Nut (14) der Segmente (20) so angeordnet ist, dass die Schlauchfeder (12) die Segmente (20) in Radialrichtung R mit einer Kraft beaufschlagt.

2. Packungsring (10) gemäß Anspruch 1, **dadurch gekennzeichnet, dass** der Indikatorstift (32) derart angeordnet ist, dass er sich von einer Außenumfangsfläche (22) des Segments (20) in Radialrichtung (R) wegerstreckt.

3. Packungsring (10) gemäß Anspruch 1 oder 2, **dadurch gekennzeichnet, dass** der Indikatorstift (32) eine Schrägfläche (34) aufweist, wobei die Schrägfläche (34) mit der Radialrichtung (R) einen Winkel (α) bildet, wobei α > 0° ist.

4. Dichtungsvorrichtung (1) mit einem Gehäuse (50) und zumindest einem Packungsring (10) gemäß einem der vorhergehenden Ansprüche.

5. Dichtungsvorrichtung (1) nach Anspruch 4, **dadurch gekennzeichnet, dass** die Dichtungsvorrichtung (1) eine Sensoreinrichtung (40) aufweist, die eine Position zumindest eines der Segmente (20) entlang einer Radialrichtung (R) senkrecht zu der Hauptachse (X) des Packungsrings (10) erfasst.

6. Dichtungsvorrichtung (1) gemäß einem der Ansprüche 4 oder 5, **dadurch gekennzeichnet, dass** die Sensoreinrichtung (40) zumindest ein Sensorelement (42) aufweist.

7. Dichtungsvorrichtung (1) gemäß einem der Ansprüche 4 bis 6, **dadurch gekennzeichnet, dass** das Gehäuse (50) zumindest zwei Kammerscheiben (52) aufweist, wobei zwischen zwei nebeneinander angeordneten Kammerscheiben (52) zumindest ein Packungsring (10) angeordnet ist.

8. Kompressor (100) mit einer Kolbenstange (110) und mit zumindest einem Packungsring (10) gemäß einem der Ansprüche 1 bis 3 und/oder zumindest einer Dichtungsvorrichtung (1) gemäß einem der Ansprüche 4 bis 7.

9. Rotatorisches System (70) mit einer um eine Wellenachse (W) drehbare Welle (72) und zumindest einem Packungsring (10) gemäß einem der Ansprüche 1 bis 3 und/oder zumindest einer Dichtungsvorrichtung (1) gemäß einem der Ansprüche 4 bis 7.

10. Verfahren zum Erfassen des Verschleißzustandes eines Packungsrings (10) gemäß einem der Ansprüche 1 bis 3 und/oder einer Dichtungsvorrichtung (1) gemäß einem der Ansprüche 4 bis 7 mit folgenden Schritten:
- Anordnen einer Sensoreinrichtung (40), sodass sie mit einem Segment (20) und/oder einem an einem Segment (20) angeordneten Indikatormittel (30) zusammenwirkt;
- Festlegen einer Startposition des Segments (20) oder des Indikatormittels (30) entlang einer Radialrichtung (R);
- Ermitteln zumindest einer Position des Segments (20) oder des Indikatormittels (30) entlang der Radialrichtung (R) des Segments (20) relativ zu der Startposition mittels der Sensoreinrichtung (40).

11. Verfahren gemäß Anspruch 10, **dadurch gekennzeichnet, dass** die Position des Segments (20) oder der Indikatoreinrichtung (30) als Funktion über der Zeit aufgezeichnet wird.

12. Verfahren gemäß Anspruch 10 oder 11, **dadurch gekennzeichnet, dass** zu Beginn des Verfahrens ein Endwert für die Position des Segments (20) oder des Indikatormittels (30) festgelegt wird, dass die ermittelte Position mit dem Endwert verglichen wird und dass bei einem Erreichen oder einer Überschreitung des Endwerts eine Warnmeldung erfolgt.

13. Verfahren gemäß einem der Ansprüche 10 bis 12, **dadurch gekennzeichnet, dass** die Ermittlung der Position des Segments (20) oder des Indikatormittels (30) über eine Abstandsmessung erfolgt.

## Claims

1. A packing ring (10) for a sealing device (1), comprising:
at least two segments (20) that are arranged around a common main axis (X),
wherein the packing ring (10) has at least one indicator means (30) that indicates a position of at least one of the segments (20) in a radial direction (R) perpendicular to the main axis (X) of the packing ring (10),
wherein the indicator means (30) comprises at least one indicator pin (32), which is arranged on a segment (20), and
wherein the indicator pin (32) is connected to the segment (20), wherein a tube spring (12) is provided, which is arranged in a common groove (14) of the segments (20) such that the tube spring (12) applies a force to the segments (20) in the radial direction (R).

2. The packing ring (10) according to claim 1, **characterised in that** the indicator pin (32) is arranged such that it extends away from an outer circumferential surface of the segment in the radial direction (R).

3. The packing ring (10) according to claim 1 or 2, **characterised in that** the indicator pin (32) comprises a slanted surface (34), wherein the slanted surface (34) forms an angle (α) with the radial direction (R), with α > 0°.

4. A sealing device (1) comprising a housing (50) and at least one packing ring (10) according to one of the preceding claims.

5. The sealing device (1) according to claim 4, **characterised in that** the sealing device (1) comprises a sensor device (40) which detects a position of at least one of the segments (20) in a radial direction (R) perpendicular to the main axis (X) of the packing ring (10).

6. The sealing device (1) according to one of claims 4 or 5, **characterised in that** the sensor device (40) comprises at least one sensor element (42).

7. The sealing device (1) according to one of claims 4 to 6, **characterised in that** the housing (50) comprises at least two chamber disks (52), wherein at least one packing ring (10) is situated between two adjacent chamber disks (52).

8. A compressor (100) having a piston rod (110) and having at least one packing ring (10) according to one of claims 1 to 3 and/or at least one sealing device (1) according to one of claims 4 to 7.

9. A rotational system (70) having a shaft (72) rotatable about a shaft axis (W) and at least one packing ring (10) according to one of claims 1 to 3 and/or at least one sealing device (1) according to one of claims 4 to 7.

10. A method for detecting a condition of wear of a packing ring (10) according to one of claims 1 to 3 and/or a sealing device (1) according to one of claims 4 to 7 with the following steps:
- arranging a sensor device (40) so that it interacts with a segment (20) and/or an indicator means (30) arranged on the segment (20);
- establishing a start position of the segment (20) or the indicator means (30) along a radial direction (R);
- determining at least one position of the segment (20) or the indicator means (30) along the radial direction (R) of the segment (20) relative to the start position by means of the sensor device (40).

11. The method according to claim 10, **characterised in that** the position of the segment (20) or the indicator means (30) is plotted as a function over time.

12. The method according to claim 10 or 11, **characterised in that** at the beginning of the method an end value for the position of the segment (20) or the indicator means (30) is established, the position determined is compared to the end value, and a warning is given upon reaching or surpassing the end value.

13. The method according to one of claims 10 to 12, **characterised in that** the determination of the position of the segment (20) or the indicator means (30) is done by a distance measurement.

## Revendications

1. Bague de garniture (10) pour un dispositif d'étanchéité (1) comprenant au moins deux segments (20) qui sont agencés autour d'un axe principal (X) commun, la bague de garniture (10) comprenant au moins un moyen d'indication (30) qui indique une position d'au moins un des segments (20) le long d'une direction radiale (R) perpendiculaire à l'axe principal (X) de la bague de garniture (10), le moyen d'indication (30) comprenant au moins une tige d'indication (32) qui est agencée au segment (20) et la tige d'indication (32) étant reliée au segment (20), un ressort tubulaire (12) étant fourni, lequel ressort tubulaire est agencé dans une rainure commune (14) des segments (20) de sorte que le ressort tubulaire (12) applique une force sur les segments (20) dans la direction radiale R.

2. Bague de garniture (10) selon la revendication 1, **caractérisée en ce que** la tige d'indication (32) est agencée de telle manière qu'elle s'étend à partir d'une surface périphérique extérieure (22) du segment (20) dans la direction radiale (R).

3. Bague de garniture (10) selon la revendication 1 ou 2, **caractérisée en ce que** la tige d'indication (32) comprend une surface inclinée (34), la surface inclinée (34) formant un angle (α) avec la direction radiale (R) avec α > 0°.

4. Dispositif d'étanchéité (1) comprenant un boîtier (50) et au moins une bague de garniture (10) selon l'une quelconque des revendications précédentes.

5. Dispositif d'étanchéité (1) selon la revendication 4, **caractérisé en ce que** le dispositif d'étanchéité (1) comprend un dispositif de détection (40) qui détecte une position d'au moins un des segments (20) le long d'une direction radiale (R) perpendiculaire à l'axe principal (X) de la bague de garniture (10).

6. Dispositif d'étanchéité (1) selon la revendication 4 ou 5, **caractérisé en ce que** le dispositif de détection (40) comprend au moins un élément de détection (42).

7. Dispositif d'étanchéité (1) selon l'une quelconque des revendications 4 à 6, **caractérisé en ce que** le boîtier (50) comprend au moins deux disques de chambre (52), au moins une bague de garniture (10) étant agencée entre deux disques de chambre (52) agencés l'un à côté de l'autre.

8. Compresseur (100) comprenant une tige de piston (110) et au moins une bague de garniture (10) selon l'une quelconque des revendications 1 à 3 et/ou au moins un dispositif d'étanchéité (1) selon l'une quelconque des revendications 4 à 7.

9. Système rotatif (70) comprenant un arbre (72) pouvant tourner autour d'un axe d'arbre (W) et au moins une bague de garniture (10) selon l'une quelconque des revendications 1 à 3 et/ou au moins un dispositif d'étanchéité (1) selon l'une quelconque des revendications 4 à 7.

10. Procédé de détection de l'état d'usure d'une bague de garniture (10) selon l'une quelconque des revendications 1 à 3 et/ou d'un dispositif d'étanchéité (1) selon l'une quelconque des revendications 4 à 7, comprenant les étapes ci-dessous consistant à :
- agencer un dispositif de détection (40) de sorte qu'il interagisse avec un segment (20) et/ou un moyen d'indication (30) agencé à un segment (20) ;
- définir une position de départ du segment (20) ou du moyen d'indication (30) le long d'une direction radiale (R) ;
- déterminer au moins une position du segment (20) ou du moyen d'indication (30) le long de la direction radiale (R) du segment (20) par rapport à la position de départ au moyen du dispositif de détection (40).

11. Procédé selon la revendication 10, **caractérisé en ce que** la position du segment (20) ou du dispositif d'indication (30) est enregistrée en fonction du temps.

12. Procédé selon la revendication 10 ou 11, **caractérisé en ce qu'**une valeur finale pour la position du segment (20) ou du moyen d'indication (30) est définie au début du procédé, **en ce que** la position déterminée est comparée à la valeur finale et **en ce qu'**un message d'avertissement est émis en cas d'atteinte ou de dépassement de la valeur finale.

13. Procédé selon l'une quelconque des revendications 10 à 12, **caractérisé en ce que** la détermination de la position du segment (20) ou du moyen d'indication (30) résulte d'une mesure de distance.
